Europäisches Patentamt

European Patent Office

Office européen des brevets

(19)

(11) Numéro de publication : **0 087 116**
**B1**

(12) **FASCICULE DE BREVET EUROPÉEN**

(45) Date de publication du fascicule du brevet :
28.05.86

(51) Int. Cl.⁴ : **H 02 K   1/18**

(21) Numéro de dépôt : **83101462.6**

(22) Date de dépôt : **16.02.83**

(54) Stator à suspension élastique pour machine dynamoélectrique synchrone.

(30) Priorité : **18.02.82 FR 8202675**

(43) Date de publication de la demande :
**31.08.83 Bulletin 83/35**

(45) Mention de la délivrance du brevet :
**28.05.86 Bulletin 86/22**

(84) Etats contractants désignés :
**BE CH DE FR GB IT LI**

(56) Documents cités :
**DE-B- 1 189 189
DE-B- 1 232 651
FR-A-  685 781
FR-A- 1 065 467
US-A- 2 424 299
US-A- 2 489 109
US-A- 3 531 667
PATENTS ABSTRACTS OF JAPAN, vol. 5, no. 176, 12
novembre 1981, page (E-81)(848)**

(73) Titulaire : **ALSTHOM
38, avenue Kléber
F-75784 Paris Cédex 16 (FR)**

(72) Inventeur : **Guyot, Jean
Cidex 311
F-90150 Fontaine (FR)**
Inventeur : **Guillard, Jean-Michel
20 rue des Eglantines
Essert F-90000 Belfort (FR)**
Inventeur : **Bauchet, Germain
25, rue des Commandos d'Afrique
F-90300 Cravanche (FR)**

(74) Mandataire : **Weinmiller, Jürgen et al
Zeppelinstrasse 63
D-8000 München 80 (DE)**

EP 0 087 116 B1

Jouve, 18, rue St-Denis, 75001 Paris, France

## Description

La présente invention concerne la construction des stators des grosses machines électriques synchrones, et plus particulièrement, celle des stators des turbo-alternateurs de forte puissance par exemple supérieure à 100 MW environ.

Un tel stator comporte de manière habituelle :

un circuit magnétique constitué par une succession axiale de couronnes circulaires de même axe que celui du stator, chaque couronne étant constituée de tôles magnétiques,

des enroulements conducteurs s'étendant axialement dans des encoches creusées dans la surface cylindrique interne du circuit magnétique,

des barreaux d'assemblage répartis angulairement autour et s'étendant axialement sur la surface cylindrique externe du circuit magnétique, une partie radialement interne de chaque barreau pénétrant dans ce circuit en formant un assemblage à queue d'aronde avec les couronnes successives,

des moyens de serrage axial du circuit magnétique,

une carcasse coaxiale au stator, entourant le circuit magnétique et constituée par une virole cylindrique externe et des voiles raidisseurs en forme de couronnes circulaires, soudés intérieurement à cette virole et se succédant axialement,

et des pattes de fixation de la carcasse à une structure de support extérieure.

En fonctionnement normal, le circuit magnétique du stator d'une grande machine électrique se déforme sous l'action des forces induites par le champ magnétique du rotor. Chaque point du cylindre extérieur du circuit magnétique se déplace en synchronisme avec la rotation du rotor, ce déplacement étant la résultante d'une vibration radiale et d'une vibration tangentielle. Plus précisément le point décrit sensiblement une ellipse dont le grand axe est l'amplitude de vibration radiale et le petit axe, l'amplitude de vibration tangentielle.

Ces vibrations, lorsqu'elles sont transmises intégralement à la carcasse du stator et aux fondations, sont à l'origine de bruits et de dégradations par fatigue des pièces de liaison qui les supportent.

C'est pourquoi il est classique de prévoir, pour le circuit magnétique statorique, une suspension élastique, qui a, entre autres, la fonction de liaison mécanique entre le circuit magnétique et les fondations de l'aternateur, et doit, dans le cas des grosses machines électriques, amortir efficacement la transmission des vibrations du circuit magnétique vers la carcasse et les fondations.

Dans un premier type connu de suspension élastique, le circuit magnétique est monté dans une carcasse intérieure ou corset de forme générale cylindrique et les éléments élastiques sont fixés sur deux ou trois génératrices de ce corset, (deux latérales et une inférieure). Ces éléments élastiques, sous forme de lames ressorts, positionnées tangentiellement au circuit magnétique et à l'axe de la machine sont destinées à assurer la liaison entre le corset et la carcasse externe de l'alternateur.

Ce premier type connu présente les inconvénients d'impliquer la construction coûteuse de deux carcasses et d'augmenter ainsi l'encombrement du stator.

Un deuxième type connu comporte, entre les barreaux d'assemblage du circuit magnétique et les voiles de la carcasse, des ressorts à lames s'étendant axialement sur certains de ces barreaux. Des points de fixation se succèdent axialement le long de chacun de ces barreaux pour lier alternativement le ressort aux barreaux d'assemblage et à un voile de la carcasse. Ces ressorts assurent la liaison du circuit magnétique à la carcasse et l'amortissement des déplacements radiaux et tangentiels du circuit magnétique.

Ils sont groupés dans les zones de la carcasse qui présentent la plus grande rigidité c'est-à-dire qui sont les moins susceptibles de déplacements par déformation élastiques de la carcasse. Ces zones sont celles qui sont les plus proches des pattes de fixation de la carcasse à un massif bétonné extérieur.

Ce deuxième type connu de suspension élastique est décrit dans le brevet FR-A-2 376 542 correspondant au brevet US-A-4 145 626. Le mode de réalisation envisagé pour les ressorts consiste en la formation d'une fente séparant un barreau à hauteur radiale accrue, sur certaines parties de sa longueur, en une partie radialement interne constituant un barreau d'assemblage du circuit magnétique et une partie radialement externe jouant le rôle de ressort à lame. Un tel mode de réalisation est relativement simple mais présente l'inconvénient de rendre plus difficile l'obtention des caractéristiques mécaniques convenables d'élasticité et d'amortissement vis-à-vis des déplacements tangentiels et radiaux.

Enfin, dans ces deux types connus de suspension élastique, le système de suspension élastique est soumis à l'ensemble des charges et des efforts représentés par : la masse du circuit magnétique bobiné, le couple nominal et éventuellement, le couple important pouvant résulter d'un défaut électrique accidentel (court-circuit, faux couplage). La nécessité de résister de manière sûre à tous ces efforts rend coûteuse la réalisation de ce système.

Par ailleurs, le brevet US-A-2 424 299 décrit un stator pour machine électrique, comprenant des voiles flottants, des voiles raidisseurs, des barreaux d'assemblage, et des barreaux de suspension de forme telle que leur partie centrale soit élastique dans le sens radial et sensiblement rigide dans le sens axial. Mais les voiles raidisseurs ne comportent aucun organe de limitation d'un déplacement dans le sens tangentiel du circuit magnétique susceptible de se produire lors d'un court-circuit aux bornes et d'endommager les parties électriques et mécaniques de la machine.

La présente invention a pour but la réalisation d'un stator à suspension élastique pour machine dynamoélectrique synchrone, de manière à assurer, de manière simple et peu coûteuse, un amortissement efficace des vibrations transmises à la carcasse, sans augmentation de l'encombrement, et sans risque d'entraîner un déplacement tangentiel du circuit magnétique, et par suite des dégradations des parties électriques et mécaniques de la machine, en cas de court-circuit aux bornes.

Elle a pour objet un stator à suspension élastique pour machine dynamoélectrique synchrone, ce stator présentant un axe longitudinal et comportant

un circuit magnétique constitué par une succession axiale de couronnes circulaires de même axe que celui du stator, chaque couronne étant constituée de tôles magnétiques,

des enroulements conducteurs s'étendant axialement dans des encoches creusées dans la surface cylindrique interne du circuit magnétique,

des barreaux d'assemblage répartis angulairement autour et s'étendant axialement sur la surface cylindrique externe du circuit magnétique, une partie radialement interne de chaque barreau pénétrant dans ce circuit en formant un assemblage à queue d'aronde avec les couronnes successives,

des moyens de serrage axial du circuit magnétique,

une carcasse coaxiale au stator, entourant le circuit magnétique et constituée par une virole cylindrique externe et des voiles raidisseurs en forme de couronnes circulaires, soudés intérieurement à cette virole et se succédant axialement,

des pattes de fixation de la carcasse à une structure de support extérieure,

des barreaux de suspension flexibles élastiquement s'étendant parallèlement aux barreaux d'assemblage et répartis angulairement autour du circuit magnétique radialement au-delà des barreaux d'assemblage, chacun de ces barreaux de suspension étant pourvu de fixations qui se succèdent selon sa longueur et qui le fixent alternativement au circuit magnétique par l'intermédiaire des barreaux d'assemblage et à des voiles de la carcasse,

une succession axiale de voiles flottants en forme de couronnes circulaires coaxiales au stator autour du circuit magnétique, ces voiles flottants étant intercalés axialement entre les voiles raidisseurs de la carcasse de manière à ne pas augmenter l'encombrement du stator, étant soudés sur leurs bords intérieurs aux barreaux d'assemblage de manière à se déformer avec le circuit magnétique, et étant soudés aux barreaux de suspension de manière à réaliser lesdites fixations de ces barreaux de suspension au circuit magnétique,

les voiles raidisseurs de la carcasse s'étendant radialement vers l'axe au-delà des barreaux de suspension jusqu'au voisinage des barreaux d'assemblage de manière à présenter une grande rigidité,

ce stator étant caractérisé par le fait que les voiles raidisseurs de la carcasse, qui ne sont pas fixés aux barreaux de suspension, sont munis d'une semelle cylindrique de renfort coaxiale au stator, soudée sur leur bord radialement interne, et portant plusieurs paires de butées de limitation de déplacement réparties sur des génératrices externes du circuit magnétique, les deux butées de chaque paire étant disposées tangentiellement de part et d'autre d'un barreau d'assemblage de manière à limiter dans les deux sens le déplacement angulaire accidentel du circuit magnétique sous l'action d'un défaut électrique et à limiter ainsi le couple de rotation supporté par les barreaux de suspension flexibles.

Les barreaux d'assemblage formant clavettes sont solidaires de plusieurs voiles flottants se déformant avec le circuit magnétique, ces voiles flottants transmettant les charges et les efforts en fonctionnement normal, à des ressorts axiaux constitués par les barreaux de liaison et présentant de préférence une rigidité différente suivant leurs deux axes, radial et tangentiel, ces ressorts étant regroupés au voisinage de la zone de la carcasse ayant la plus grande rigidité et la plus proche des liaisons au massif.

Le système de butées limitant la course tangentielle du déplacement du circuit magnétique en cas de court-circuit aux bornes prend appui sur les barreaux clavettes de la machine et les transmet directement par la carcasse aux appuis sur le massif.

Le système ainsi conçu assure un amortissement des vibrations engendrées par le circuit magnétique et limite l'émission de bruit.

A l'aide des figures schématiques ci-jointes, on va décrire ci-après, à titre non limitatif, comment l'invention peut être mise en œuvre. Il doit être compris que les éléments décrits et représentés peuvent, sans sortir du cadre de l'invention, être remplacés par d'autres éléments assurant les mêmes fonctions techniques. Lorsqu'un même élément est représenté sur plusieurs figures il y est désigné par le même signe de référence.

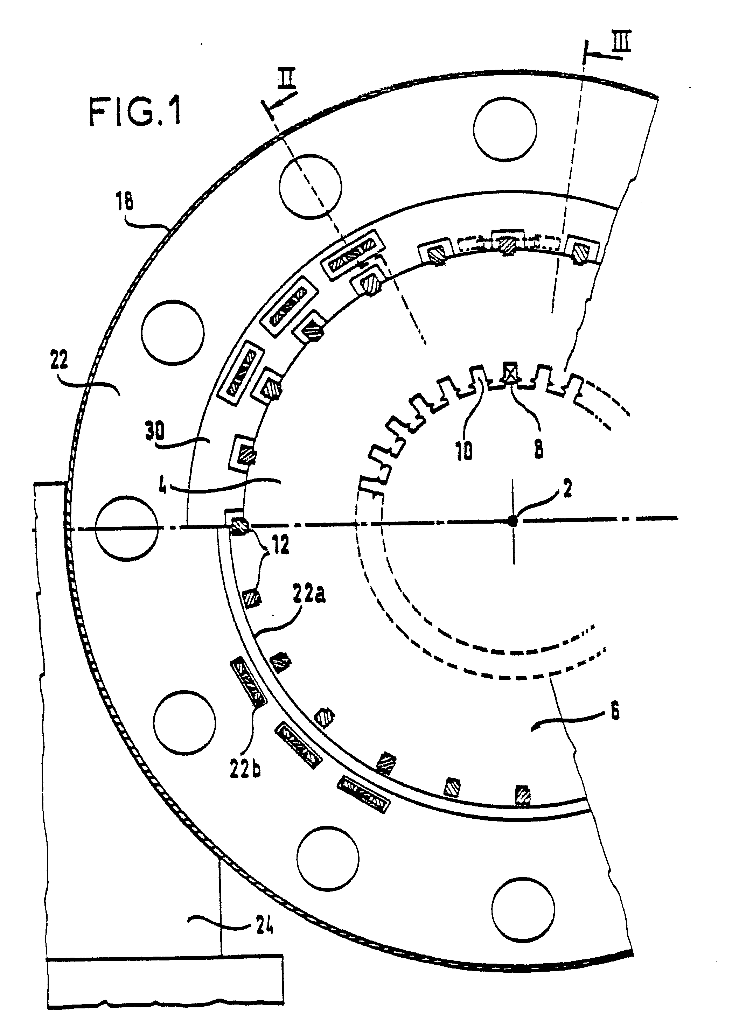

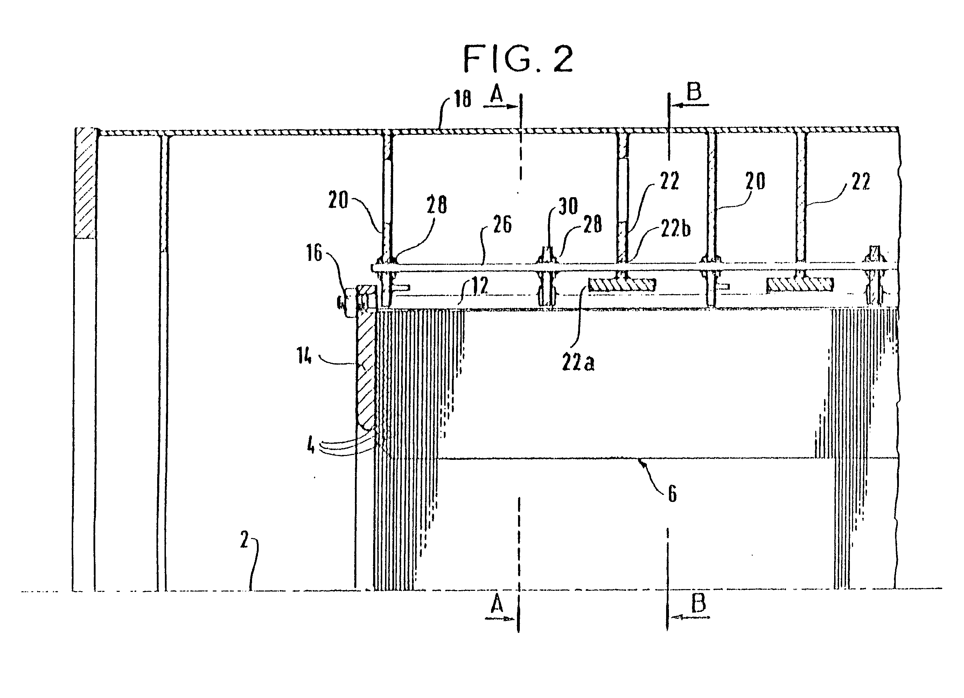

La figure 1 représente une vue d'un stator selon l'invention en coupe par deux plans perpendiculaires à son axe, selon les lignes AA et BB de la figure 2, correspondant respectivement aux moitiés supérieure et inférieure de la figure 1.

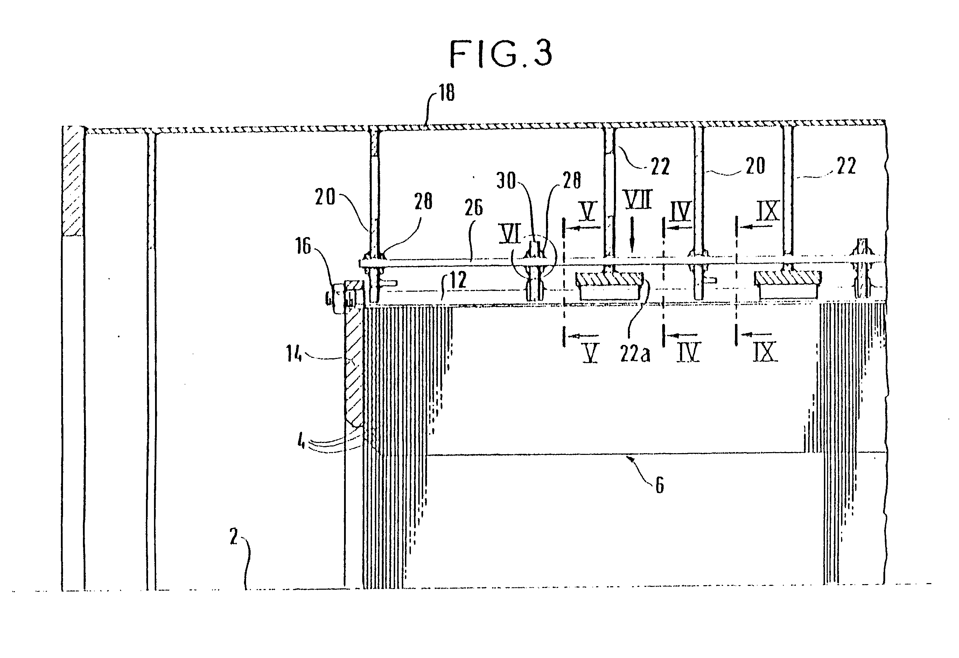

Les figures 2 et 3 représentent des vues de ce stator en coupe par des plans axiaux selon les lignes II-II et III-III de la figure 1.

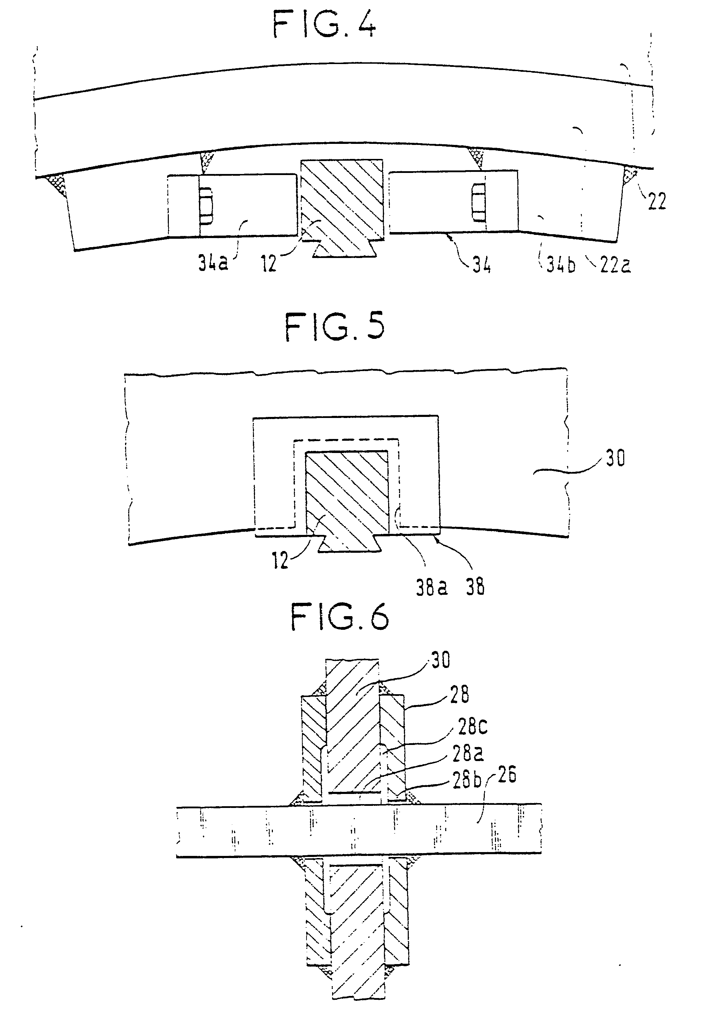

Les figures 4 et 5 représentent des vues agrandies en coupe par des plans perpendiculaires à l'axe selon les lignes IV-IV et V-V de la figure 3, pour montrer une paire de butées de limitation de couple et la fixation d'un barreau d'assemblage sur un voile flottant.

La figure 6 représente une vue agrandie d'un détail VI de la figure 3 pour montrer la fixation d'un barreau de suspension sur un voile flottant ou un voile raidisseur.

La figure 7 représente une vue agrandie d'un barreau de suspension selon une flèche radiale VII de la figure 3.

La figure 8 représente une vue encore agrandie du même barreau en coupe par un plan VIII-VIII de la figure 7.

La figure 9 représente une vue agrandie en coupe par un plan perpendiculaire à l'axe selon une ligne IX-IX de la figure 3, pour montrer les pattes de réglage de la position des barreaux de suspension.

Le stator décrit à titre d'exemple est celui de l'alternateur d'un groupe turbo-alternateur et il peut présenter par exemple une longueur hors tout de 6 à 9 m, pour un diamètre de carcasse de 4 m environ et une puissance électrique 600 MW.

Il présente un axe longitudinal 2, qui est celui de l'alternateur. Il comporte les éléments bien connus suivants :

un circuit magnétique 6 constitué par une succession axiale de couronnes circulaires de même axe que celui du stator, chaque couronne étant constituée de tôles magnétiques 6,

des enroulements conducteurs 8 s'étendant axialement dans des encoches 10 creusées dans la surface cylindrique interne du circuit magnétique 6,

des barreaux d'assemblage 12 répartis angulairement autour et s'étendant axialement sur la surface cylindrique externe du circuit magnétique, une partie radialement interne de chaque barreau pénétrant dans ce circuit en formant un assemblage à queue d'aronde avec les couronnes successives,

des moyens de serrage axial 14, 16 du circuit magnétique

une carcasse coaxiale au stator, entourent le circuit magnétique et constituée par une virole cylindrique externe 18 et des voiles raidisseurs 20, 22 en forme de couronnes circulaires, soudés intérieurement à cette virole et se succédant axialement,

et des pattes de fixation 24 de la carcasse à une structure de support extérieure,

Les moyens de serrage axial sont constitués par des plaques de serrage 14 disposées aux deux extrémités du circuit magnétique 6, des écrous 16 vissés sur des extrémités filetées des barreaux d'assemblage 12 pour serrer ces plaques, et éventuellement des tirants non représentés. La structure de support extérieure est constituée de massifs bétonnés non représentés.

Le stator comporte de plus un système de suspension élastique du circuit magnétique pour amortir les vibrations transmises à la carcasse.

Ce système élastique comporte des barreaux de suspension 26 flexibles élastiquement s'étendant parallèlement aux barreaux d'assemblage 12 et répartis angulairement autour du circuit magnétique 6 radialement au-delà des barreaux d'assemblage, chacun de ces barreaux de suspension étant pourvu de fixations 28 qui se succèdent selon sa longueur et qui le fixent alternativement au circuit magnétique par l'intermédiaire des barreaux d'assemblage et à des voiles de la carcasse,

Conformément à l'invention ce stator comporte en outre une succession axiale de voiles flottants 30 en forme de couronnes circulaires coaxiales au stator autour du circuit magnétique, ces voiles flottants étant intercalés axialement entre les voiles raidisseurs 20, 22 de la carcasse de manière à ne pas augmenter l'encombrement du stator, étant soudés sur leurs bords intérieurs aux barreaux d'assemblage 12 de manière à se déformer avec le circuit magnétique, et étant soudés aux barreaux de suspension 26 de manière à réaliser lesdites fixations de ces barreaux de suspension au circuit magnétique,

les voiles raidisseurs 20, 22 de la carcasse s'étendant radialement vers l'axe au-delà des barreaux de suspension jusqu'au voisinage des barreaux d'assemblage de manière à présenter une grande rigidité.

Chacun de ces barreaux de suspension 26 s'étend un peu au-delà des deux extrémités du circuit magnétique 6.

Selon une disposition souvent avantageuse représentée chacun de ces barreaux est réalisé à partir d'une seule barre d'acier et il est creusé de fentes 32 le divisant en plusieurs éléments 26a, 26b, 26c s'étendant parallèlement côte à côte de manière à augmenter sa flexibilité. Ces fentes sont interrompues au voisinage de chacune des fixations de ces barreaux de manière à faciliter la réalisation de ces fixations.

Ces éléments présentent tangentiellement une largeur plus grande que leur épaisseur radiale de manière à se déplacer par flexion plus facilement dans la direction radiale que dans la direction tangentielle.

La largeur tangentielle, l'épaisseur radiale des barreaux de suspension ainsi que la distance axiale entre deux fixations sont déterminés par le calcul afin d'obtenir l'amortissement optimum des vibrations.

Selon l'invention, les voiles raidisseurs (22) de la carcasse, qui ne sont pas fixés aux barreaux de suspension (26), sont munis d'une semelle cylindrique de renfort 22a coaxiale au stator, soudée sur leur bord radialement interne, et portant plusieurs paires de butées de limitation de déplacements dus au couple 34, 34a réparties angulairement autour du circuit magnétique, les deux butées 34, 34a de chaque paire étant disposées tangentiellement de part et d'autre d'un barreau d'assemblage 12 de manière à limiter dans les deux sens le déplacement angulaire accidentel du circuit magnétique 6 sous l'action d'un défaut électrique et à limiter ainsi les déplacements dus au couple de rotation supporté par les barreaux de suspension flexibles 26 en régime perturbé.

Les voiles raidisseurs 22 munis de ces butées de limitation de couple 34, 34a sont percés d'ouverture 22b suffisamment grandes pour que ces voiles soient traversés par les barreaux de suspension 26 sans risque de contact entre ces barreaux et ces voiles lorsque les déformations du circuit magnétique 6 font fléchir ces barreaux, d'autres voiles raidisseurs 20 étant soudés à ces barreaux pour réaliser lesdites fixations de ces barreaux à des voiles de la carcasse. On réalise ainsi deux chaînes cinématiques distinctes pour transmettre les efforts des barreaux d'assemblage 12 à la virole externe 18 de la carcasse, à savoir une première chaîne pour l'amortissement de vibrations, cette première chaîne comportant les voiles flottants 30, les barreaux de suspension 26 et les voiles raidisseurs 20 soudés à ces barreaux et une deuxième chaîne pour la transmission des efforts supplémentaires créés par des couples accidentels, cette deuxième chaîne comportant les butées de limitation de couple 34, 34a et les voiles raidisseurs 22 portant ces butées.

L'axe 2 du stator est souvent horizontal comme représenté. Les pattes de fixation de la carcasse sont alors soudées latéralement à la virole externe 18. Dans ce cas, il apparaît préférable que les barreaux de suspension soient groupés sur les deux côtés du stator de manière à transmettre les efforts aux zones de la carcasse maintenues le plus rigidement par ces pattes de fixation, les butées de limitation de couple 34, 34a étant disposées dans les parties supérieure et inférieure du stator.

Plus précisément, dans l'exemple représenté, les paires de butées sont réparties sur toute la longueur du circuit magnétique et montées de part et d'autre des deux barreaux d'assemblage, haut et bas, situés dans le plan vertical de l'axe du stator. Cette position permet le montage définitif de ces butées, avec un jeu précis, lorsque la machine est posée verticalement pour procéder à l'empilage des tôles 4 sans que les jeux tangentiels entre butées et barreaux d'assemblage varient lorsque l'on remet la machine dans sa position de fonctionnement normal (axe machine horizontal).

Chaque butée 34 est constituée par un pavé en alliage métallique à bas module d'Young permettant de dissiper l'énergie de choc sur un faible déplacement sans solliciter particulièrement les soudures de fixation d'un sabot 34b supportant ce pavé. Ce sabot est soudé sur une semelle 22a, et le pavé est monté par l'intermédiaire de vis sur le sabot.

Le jeu entre pavé et barreau est réalisé par ajustage lors du montage. Le matériau du pavé peut par exemple être du type AU4G1 ; le dimensionnement et le nombre de pavés est fonction de l'énergie de déplacement à absorber, il est spécifique à chaque type de machine. Ces éléments sont déterminés par le calcul.

Les barreaux de suspension 26 traversent les voiles flottants 30 ainsi que les voiles raidisseurs 20 auxquels ils sont fixés au niveau des ouvertures 28a laissant subsister un jeu autour de ces barreaux, et sont soudées à ces voiles par l'intermédiaire de plaques de liaison 28 percées d'ouvertures 28b que ces barreaux traversent également, ces plaques étant soudées à ces voiles sur les bords de ces plaques et à ces barreaux sur les bords des ouvertures de ces plaques de manière à constituer lesdites fixations. Un jeu 28c peut être laissé entre ces plaques et ces voiles de manière à permettre une flexion de ces plaques et de l'assemblage sans créer de risque de rupture des soudures.

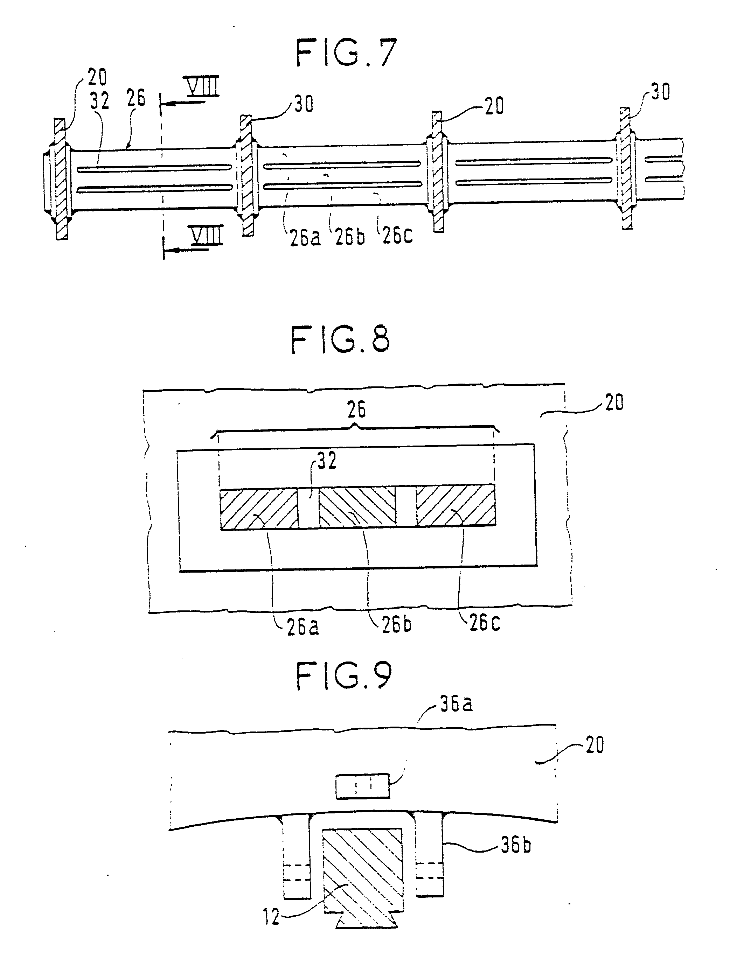

Cette disposition est représentée sur la figure 6. Elle est parfois préférable.

Selon une autre caractéristique, les voiles raidisseurs (20) de la carcasse, qui sont fixés aux barreaux de suspension (26), sont munis, sur leurs bords radialement interne, de pattes de réglage 36a, 36b taraudées pouvant recevoir des vis provisoires de réglage de manière à permettre de régler radialement et tangentiellement la position des barreaux d'assemblage 12 à l'aide de ces vis pendant la construction du stator. Les barreaux d'assemblage 12 passent avec du jeu dans des échancrures formées dans le bord radialement interne des voiles flottants, et sont fixés à ces voiles par l'intermédiaire de plaques de liaison 38 appliquées sur ces voiles en débordant de ces échancrures 38a, traversées par ces barreaux et soudées sur leur bord interne à ces barreaux et, sur leur bord externe, à ces voiles flottants, de manière à permettre d'achever la fixation de ces barreaux à ces voiles par soudure du bord externe de ces plaques après le réglage de la position de ces barreaux par rapport à ces voiles.

Ces diverses plaques de liaison sont utilisées par paires, une sur chaque face du voile auquel un barreau doit être fixé. Les barreaux de suspension peuvent ne pas comporter de fentes longitudinales dans le cas de certaines conceptions de machine permettant un niveau de contraintes relativement bas dans les soudures de liaison avec la carcasse et les voiles flottants.

Suivant la puissance de la machine à construire, certains paramètres peuvent varier :

Nombre de voiles flottants, de 2 à 5 et plus

Nombre de fixations des barreaux et suspension des ressorts sur les voiles raidisseurs de la carcasse, de 3 à 6 et plus

Le nombre et la section des barreaux de suspension.

Le bon choix de ces paramètres permet le compromis entre l'amortissement des vibrations et la transmission des efforts vers la carcasse.

Comme déjà indiqué les voiles flottants sont liés rigidement au circuit magnétique. Ils suivent toutes ses déformations et transmettent au système élastique toutes les charges et les efforts induits en fonctionnement normal. Ils transmettent ces efforts et ces charges aux barreaux de suspension par l'intermédiaire des fixations 28 soudées sur les bords des ouvertures 28a pratiquées dans les voiles flottants, dans la partie située entre le diamètre moyen et le diamètre extérieur de ceux-ci. Les barreaux de suspension, à section rectangulaire, d'une seule pièce, sur toute la longueur de la machine, viennent s'enfiler dans ces ouvertures largement dimensionnées pour tenir compte des tolérances relatives aux réalisations de mécano-soudage.

**Revendications**

1. Stator à suspension élastique pour machine dynamoélectrique synchrone, ce stator présentant un axe longitudinal (2) et comportant

un circuit magnétique (6) constitué par une succession axiale de couronnes circulaires de même axe que celui du stator, chaque couronne étant constituée de tôles magnétiques (6),

des enroulements conducteurs (8) s'étendant axialement dans des encoches (10) creusées dans la surface cylindrique interne du circuit magnétique (6),

des barreaux d'assemblage (12) répartis angulairement autour et s'étendant axialement sur la surface cylindrique externe du circuit magnétique, une partie radialement interne de chaque barreau pénétrant dans ce circuit en formant un assemblage à queue d'aronde avec les couronnes successives,

des moyens de serrage axial (14, 16) du circuit magnétique,

une carcasse coaxiale au stator, entourant le circuit magnétique et constituée par une virole cylindrique externe (18) et des voiles raidisseurs (20, 22) en forme de couronnes circulaires, soudés intérieurement à cette virole et se succédant axialement,

des pattes de fixation (24) de la carcasse à une structure de support extérieure,

des barreaux de suspension (26) flexibles élastiquement s'étendant parallèlement aux barreaux d'assemblage (12) et répartis angulairement autour du circuit magnétique (6) radialement au-delà des barreaux d'assemblage, chacun de ces barreaux de suspension étant pourvu de fixations (28) qui se succèdent selon sa longueur et qui le fixent alternativement au circuit magnétique par l'intermédiaire des barreaux d'assemblage et à des voiles de la carcasse,

une succession axiale de voiles flottants (30) en forme de couronnes circulaires coaxiales au stator autour du circuit magnétique, ces voiles flottants étant intercalés axialement entre les voiles raidisseurs (20, 22) de la carcasse de manière à ne pas augmenter l'encombrement du stator, étant soudés sur leurs bords intérieurs aux barreaux d'assemblage (12) de manière à se déformer avec le circuit magnétique, et étant soudés aux barreaux de suspension (26) de manière à réaliser lesdites fixations de ces barreaux de suspension au circuit magnétique,

les voiles raidisseurs (20, 22) de la carcasse s'étendant radialement vers l'axe au-delà des barreaux de suspension jusqu'au voisinage des barreaux d'assemblage de manière à présenter une grande rigidité, caractérisé par le fait que les voiles raidisseurs (22) de la carcasse, qui ne sont pas fixés aux barreaux de suspension (26), sont munis d'une semelle cylindrique de renfort (22a) coaxiale au stator, soudée sur leur bord radialement interne, et portant plusieurs paires de butées de limitation de déplacement (34, 34a) réparties sur des génératrices externes du circuit magnétique, les deux butées (34, 34a) de chaque paire étant disposées tangentiellement de part et d'autre d'un barreau d'assemblage (12) de manière à limiter dans les deux sens le déplacement angulaire accidentel du circuit magnétique (6) sous l'action d'un défaut électrique et à limiter ainsi le couple de rotation supporté par les barreaux de suspension flexibles (26).

2. Stator selon la revendication 1, caractérisé par le fait que les voiles raidisseurs (22) munis desdites butées de limitation de couple (34, 34a) sont percés d'ouvertures (22b) suffisamment grandes pour que ces voiles soient traversés par les barreaux de suspension (26) sans risque de contact entre ces barreaux et ces voiles lorsque les déformations du circuit magnétique (6) font fléchir ces barreaux, d'autres voiles raidisseurs (20) étant soudés à ces barreaux pour réaliser lesdites fixations de ces barreaux à des voiles de la carcasse, de manière à réaliser deux chaînes cinématiques distinctes pour transmettre les efforts des barreaux d'assemblage (12) à la virole externe (18) de la carcasse, à savoir une première chaîne pour l'amortissement de vibrations, cette première chaîne comportant les voiles flottants (30), les barreaux de suspension (26) et les voiles raidisseurs (20) soudés à ces barreaux et une deuxième chaîne pour la transmission des efforts supplémentaires créés par des couples accidentels, cette deuxième chaîne comportant les butées de limitation de couple (34, 34a) et les voiles raidisseurs (22) portant ces butées.

3. Stator selon la revendication 2, caractérisé par le fait que, l'axe (2) du stator étant horizontal et les pattes de fixation (24) de la carcasse (18, 20, 22) étant fixées latéralement à celle-ci, les barreaux de suspension (26) sont groupés sur les deux côtés du stator de manière à transmettre les efforts aux zones de la carcasse maintenues le plus rigidement par ces pattes de fixation, les butées de limitation de couple (34, 34a) étant disposées dans les parties supérieure et inférieure du stator.

4. Stator selon la revendication 1, caractérisé par le fait que les barreaux de suspension (26) s'étendent sur sensiblement toute la longueur du circuit magnétique (6).

5. Stator selon la revendication 4, caractérisé par le fait que chaque barreau de suspension (26) est creusé de fentes (32) le divisant en plusieurs éléments (26a, 26b, 26c) s'étendant parallèlement côte à côte de manière à augmenter sa flexibilité, ces fentes étant interrompues au voisinage de chacune des fixations de ces barreaux de manière à faciliter la réalisation de ces fixations.

6. Stator selon la revendication 5, caractérisé en ce que chacun des éléments (26a, 26b, 26c) est de section droite rectangulaire, et de largeur tangentielle plus grande que sur épaisseur radiale, de manière à présenter une faible inertie dans le sens radial et une plus forte inertie dans le sens tangentiel.

7. Stator selon la revendication 1, caractérisé par le fait que les barreaux de suspension (26) traversent les voiles flottants (30) ainsi que les voiles raidisseurs (20) auxquels ils sont fixés par des ouvertures (28a) laissant subsister un jeu autour de ces barreaux, et sont soudés à ces voiles par l'intermédiaire de plaques de liaison

(28) percées d'ouvertures (28b) que ces barreaux traversent également, ces plaques étant soudées à ces voiles sur les bords de ces plaques et à ces barreaux sur les bords des ouvertures de ces plaques de manière à constituer lesdites fixations, un jeu (28c) étant laissé entre ces plaques et ces voiles de manière à permettre une flexion de ces plaques et de l'assemblage sans créer de risque de rupture des soudures.

8. Stator selon la revendication 1, caractérisé par le fait que les voiles raidisseurs (20) de la carcasse, qui sont fixés aux barreaux de suspension (26), sont munis, sur leurs bords radialement internes, de pattes de réglage (36a, 36b) taraudées pouvant recevoir des vis provisoires de réglage de manière à permettre de régler radialement et tangentiellement la position des barreaux d'assemblage (12) à l'aide de ces vis pendant la construction du stator,

les barreaux d'assemblage (12) passant avec du jeu dans des échancrures formées dans le bord radialement interne des voiles flottants, et étant fixés à ces voiles par l'intermédiaire de plaques de liaison (38) appliquées sur ces voiles en débordant de ces échancrures (38a), traversées par ces barreaux et soudées sur leur bord interne à ces barreaux et sur leur bord externe à ces voiles flottants, de manière à permettre d'achever la fixation de ces barreaux à ces voiles par soudure du bord externe de ces plaques après le réglage de la position de ces barreaux par rapport à ces voiles.

9. Stator selon la revendication 1, caractérisé par le fait que les barreaux de suspension (26) sont constitués d'éléments (26a, 26b, 26c) présentant tangentiellement une largeur plus grande que leur épaisseur radiale de manière à se déplacer par flexion plus facilement dans la direction radiale que dans la direction tangentielle.

**Claims**

1. A resiliently suspended stator for a dynamo-electrical synchronous machine, said stator having a longitudinal axis (2) and comprising

a magnetic circuit (6) constituted by an axial succession of circular rings of the same axis as that of the stator, each ring being constituted by magnetic metal sheets (6),

conductor windings (8) extending axially in grooves (10) made in the cylindrical inner surface of the magnetic circuit (6),

assembly rods (12) spaced angularly around and extending axially on the outer cylindrical surface of the magnetic circuit, a radially inner portion of each rod penetrating into this circuit and forming a dove-tailed assembly with the successive rings,

axial tightening means (14, 16) of the magnetic circuit,

a casing disposed coaxially about the stator, surrounding the magnetic circuit and constituted by a cylindrical outer collar (18) and stiffening buckles (20, 22) in the form of circular crowns, welded on the inside to this collar and succeeding each other axially,

legs (24) for fixing the casing to an outer support structure,

resiliently flexible suspension rods (26) extending parallelly to the assembly rods (12) and spaced out angularly around the magnetic circuit (6) radially outside the assembly rods, each of these suspension rods being provided with fixing points (28) succeeding each other along its length and fixing it alternatingly to the magnetic circuit via the assembly rods and to buckles of the casing,

an axial succession of floating buckles (30) in the form of circular crowns coaxial to the stator around the magnetic circuit, these floating buckles being axially located between the stiffening buckles (20, 22) of the casing so as to avoid an increase in the outside dimensions of the stator, these buckles being welded with their inner edges to the assembly rods (12) so as to deform with the magnetic circuit, and being welded to the suspension rods (26) so as to fix said points of these suspension rods to the magnetic circuit,

the stiffening buckles (20, 22) of the casing extending radially towards the axis outside the suspension rods up to the vicinity of the assembly rods so as to present a great rigidity, characterized in that the stiffening buckles (22) of the casing which are not fixed to the suspension rods (26) are supplied with a cylindrical reinforcing sole (22a) located coaxially to the stator, welded at their radially inner edge, and carrying several pairs of displacement-limiting stops (34, 34a) spaced out on outer generatrices of the magnetic circuit, the two stops (34, 34a) of each pair being disposed tangentially on either side of an assembly rod (12) so as to limit in the two directions the accidental angular displacement of the magnetic circuit (6) under the influence of an electrical fault and to thus limit the torque supported by the flexible suspension rods (26).

2. A stator according to claim 1, characterized in that the stiffening buckles (22) supplied with said torque limiting stops (34, 34a) present openings (22b) which are large enough to allow the suspension rods (26) to pass through these buckles without getting into contact with these buckles when the deformations of the magnetic circuit (6) make these rods bend, other stiffening buckles (20) being welded to these rods so as to create said fixing points of these rods to buckles of the casing, so as to realize two distinct cinematic chains for transmitting the forces of the assembly rods (12) to the outer collar (18) of the casing, that is a first chain for the damping of vibrations comprising the floating buckles (30), the suspension rods (26) and the stiffening buckles (20) welded to these rods, and a second chain for the transmission of the supplementary forces created by accidental torques, comprising the torque limiting stops (34, 34a) and the stiffening buckles (22) carrying these stops.

3. A stator according to claim 2, characterized in that, the axis (2) of the stator being horizontal and the fixing legs (24) of the casing (18, 20, 22) being laterally fixed to the latter, the suspension rods (26) are grouped on the two sides of the stator so as to transmit the forces to the portions of the casing which are maintained in the most rigid fashion by these fixing legs, the torque limiting stops (34, 34a) being disposed in the upper and lower portions of the stator.

4. A stator according to claim 1, characterized in that the suspension rods (26) extend over essentially the whole length of the magnetic circuit (6).

5. A stator according to claim 4, characterized in that each suspension rod (26) is pierced by slots (32) dividing it into several elements (26a, 26b, 26c) extending parallely side by side so as to increase its flexibility, these slots being interrupted in the vicinity of each of the fixing points of these rods so as to facilitate the realization of these fixing points.

6. A stator according to claim 5, characterized in that each of the elements (26a, 26b, 26c) has a rectangular cross-section and a tangential width which is greater than its radial thickness, so as to present a small interia in the radial direction and a greater inertia in the tangential direction.

7. A stator according to claim 1, characterized in that the suspension rods (26) pass through the floating buckles (30) as well as through the stiffening buckles (20) to which they are fixed through openings (28a) leaving a clearance around these rods, and are welded to these buckles via connection plates (28) pierced by openings (28b) which are equally passed through by these rods, these plates being welded to these buckles along the edges of these plates and to these rods along the edges of the openings of these plates so as to constitute said fixing points, a clearance (28c) being left between these plates and these buckles to as to permit a bending of these plates and of the assembly without creating the risk of a breaking of the welds.

8. A stator according to claim 1, characterized in that the stiffening buckles (20) of the casing which are fixed to the suspension rods (26) are supplied, on their radially inner edges, with threaded adjusting legs (36a, 36b) which can receive temporary adjustment screws so as to permit the radial and tangential adjustment of the position of the assembly rods (12) by means of these screws during the construction of the stator, the assembly rods (12) passing with clearance in notches formed in the radially inner edge of the floating buckles, and being fixed to these buckles via connection plates (38) applied to these buckles and protruding over these notches (38a), traversed by these rods and welded along their inner edge to these rods and along their outer edge to these floating buckles, so as to permit to achieve the fixing of these rods to these buckles by welding along the outer edge of these plates after the adjustment of the position of these rods with respect to these buckles.

9. A stator according to claim 1, characterized in that the suspension rods (26) are constituted by elements (26a, 26b, 26c) tangentially presenting a width which is larger than their radial thickness so as to move more easily by bending in the radial direction than in the tangential direction.

**Patentansprüche**

1. Stator mit elastischer Aufhängung für dynamo-elektrische Synchronmaschine, wobei dieser Stator eine Längsachse (2) besitzt und aufweist

einen Magnetkreis (6) bestehend aus einer axialen Folge von kreisförmigen, zum Stator koaxialen Kronen, die je aus Magnetblechen (6) bestehen,

Leiterwicklungen (8), die sich axial in Nuten (10) erstrecken, die in die innere zylindrische Oberfläche des Magnetkreises (6) eingeschnitten sind,

Montageanker (12), die winkelmäßig verteilt auf der äußeren zylindrischen Oberfläche des Magnetkreises angeordnet sind und sich axial auf ihr erstrecken, wobei ein radial innerer Teil jedes Ankers in diesen Kreis eindringt und dabei eine schwalbenschwanzförmige Anordnung mit den aufeinanderfolgenden Kronen bildet,

Mittel (14, 16) zum axialen Spannen des Magnetkreises,

ein zum Stator koaxiales Gehäuse, das den Magnetkreis umgibt und aus einer äußeren zylindrischen Hülle (18) und aus Versteifungsschürzen (20, 22) in Form von kreisförmigen Kronen besteht, die innen an diese Hülle angeschweißt sind und axial aufeinanderfolgen,

Stützfüße (24) zur Befestigung des Gehäuses an einer äußeren Stützstruktur,

elastisch flexible Aufhängestangen (26), die sich parallel zu den Montageankern (12) erstrecken und winkelmäßig um den Magnetkreis (6) radial jenseits der Montageanker erstrecken, wobei jede dieser Aufhängestangen mit Befestigungen (28) versehen ist, die entlang ihrer Länge aufeinanderfolgen und sie abwechselnd am Magnetkreis über die Montageanker und an Schürzen des Gehäuses befestigen,

eine axiale Folge von losen Schürzen (30) in Form von kreisförmigen Kronen, die koaxial zum Stator den Magnetkreis umgeben, wobei diese losen Schürzen axial zwischen die Versteifungsschürzen (20, 22) des Gehäuses eingefügt sind, um die Abmessungen des Stators nicht zu erhöhen, an ihren inneren Rändern an die Montageanker (12) so angeschweißt sind, daß sie sich mit dem Magnetkreis verformen, und so an die Aufhängestangen (26) angeschweißt sind, daß sie die Befestigungen dieser Aufhängestangen am Magnetkreis bilden,

wobei die Versteifungsschürzen (20, 22) des Gehäuses sich radial zur Achse jenseits der Aufhängestangen bis in die Nähe der Montageanker erstrecken, um eine große Starrheit zu bewirken, dadurch gekennzeichnet, daß die Versteifungsschürzen (22) des Gehäuses, die nicht an den Aufhängestangen (26) befestigt sind, mit einer zum Stator koaxialen zylindrischen Verstärkungssohle (22a) versehen sind, die an ihren radial inneren Rand angeschweißt ist und mehrere Paare von Anschlägen (34, 34a) zur Begrenzung der Bewegung trägt, die auf äußeren Mantellinien des Magnetkreises verteilt sind, wobei die beiden Anschläge (34, 34a) jedes Paars tangential zu beiden Seiten eines Montageankers (12) angeordnet sind, so daß sie in beiden Richtungen die versehentliche winkelmäßige Bewegung des Magnetkreises (6) aufgrund eines elektrischen Fehlers begrenzen und so das von den beweglichen Aufhängestangen (26) aufgenommene Drehmoment begrenzen.

2. Stator nach Anspruch 1, dadurch gekennzeichnet, daß die mit den das Drehmoment begrenzenden Anschlägen (34, 34a) versehenen Versteifungsschürzen (22) Öffnungen (22b) auf- weisen, die groß genug sind, damit diese Schürzen von den Aufhängestangen (26) durchquert werden können, ohne Gefahr einer Berührung zwischen diesen Stangen und diesen Schürzen, wenn die Verformungen des Magnetkreises (6) diese Stangen verbiegen, wobei andere Versteifungsschürzen (20) an diese Stangen geschweißt sind, um die Befestigungen dieser Stangen an Schürzen des Gehäuses herzustellen, um so zwei getrennte Kraftketten zu bilden, die die Kräfte der Montageanker (12) zur äußeren Hülle (18) des Gehäuses übertragen, d. h. eine erste Strecke zum Dämpfen der Vibrationen, wobei diese erste Strecke die losen Schürzen (30), die Aufhängestangen (26) und die an diese Stangen geschweißten Versteifungsschürzen (20) aufweist, und eine zweite Strecke für die Übertragung der von zufälligen Drehmomenten gebildeten zusätzlichen Kräfte, wobei diese zweite Strecke die Drehmomentbegrenzungsanschläge (34, 34a) und die diese Anschläge tragenden Versteifungsschürzen (22) aufweist.

3. Stator nach Anspruch 2, dadurch gekennzeichnet, daß, während die Achse (2) des Stators waagerecht ist und die Stützfüße (24) des Gehäuses (18, 20, 22) seitlich an diesem befestigt sind, die Aufhängestangen (26) auf den beiden Seiten des Stators so gruppiert sind, daß sie die Kräfte auf die Bereiche des Gehäuses übertragen, die am starrsten von diesen Befestigungshaltern ge- halten werden, wobei die Drehmoment- begrenzungsanschläge (34, 34a) in den oberen und unteren Bereichen des Stators angeordnet sind.

4. Stator nach Anspruch 1, dadurch gekennzeichnet, daß die Aufhängestangen (26) sich im wesentlichen über die gesamte Länge des Magnetkreises (6) erstrecken.

5. Stator nach Anspruch 4, dadurch gekennzeichnet, daß jede Aufhängestange (26) Schlitze (32) aufweist, die sie in mehrere Elemente (26a, 26b, 26c) aufteilen, die sich parallel nebeneinander erstrecken, um ihre Biegsamkeit zu erhöhen, wobei diese Schlitze in der Nähe jeder der Befestigungen dieser Stangen unterbrochen sind, um die Herstellung dieser Befestigungen zu erleichtern.

6. Stator nach Anspruch 5, dadurch gekennzeichnet, daß jedes der Elemente (26a, 26b, 26c) einen rechteckförmigen Querschnitt und eine tangentiale Breite aufweist, die größer ist als die radiale Dicke, um eine geringe Trägheit in radialer Richtung und eine größere Trägheit in tangentialer Richtung zu haben.

7. Stator nach Anspruch 1, dadurch gekennzeichnet, daß die Aufhängestangen (26) die losen Schürzen (30) sowie die Versteifungsschürzen (20) durchqueren, an denen sie durch Öffnungen (28a) hindurch befestigt sind, welche ein Spiel um diese Stangen freilassen, und an diese Schürzen über Verbindungsplatten (28) angeschweißt sind, die Öffnungen (28b) aufweisen, welche diese Stangen ebenfalls durchqueren, wobei diese Platten mit diesen Schürzen an den Rändern dieser Platten und mit diesen Stangen an den Rändern der Öffnungen dieser Platten verschweißt sind, um die Befestigungen zu bilden, wobei ein Spiel (28c) zwischen diesen Platten und diesen Schürzen gelassen wird, um eine Biegung dieser Platten und der Einheit zu ermöglichen, ohne die Gefahr eines Reißens der Schweißnähte hervorzurufen.

8. Stator nach Anspruch 1, dadurch gekennzeichnet, daß die Versteifungsschürzen (20) des Gehäuses, die an den Aufhängestangen (26) befestigt sind, an ihren radial inneren Rändern mit mit Gewinde versehenen Justierlaschen (36a, 36b) versehen sind, die provisorische Justierschrauben aufnehmen können, um eine radiale und eine tangentiale Justierung der Position der Montageanker (12) mithilfe dieser Schrauben während der Herstellung des Stators zu ermöglichen,

wobei die Montageanker (12) mit Spiel durch am radial inneren Rand der losen Schürzen gebildete Kerben verlaufen und an diesen Schürzen über Verbindungsplatten (38) befestigt sind, die auf diesen Schürzen aufliegen und über diese Kerben (38a) vorstehen, von diesen Ankern durchquert und an ihrem inneren Rand mit diesen Ankern und an ihrem äußeren Rand mit diesen losen Schürzen verschweißt sind, um die endgültige Befestigung dieser Anker an diesen Schürzen durch Verschweißen des äußeren Rands dieser Platten nach der Justierung der Position dieser Anker in bezug auf diese Schürzen zu ermöglichen.

9. Stator nach Anspruch 1, dadurch gekennzeichnet, daß die Aufhängestangen (26) aus Elementen (26a, 26b, 26c) bestehen, die tangential eine größere Breite als ihre radiale Dicke aufweisen, um sich durch Biegung leichter in radialer Richtung als in tangentialer Richtung zu bewe- gen.

FIG.1

# FIG. 2

FIG.3

## FIG. 4

## FIG. 5

## FIG. 6

# FIG.7

# FIG.8

# FIG.9